# EUROPÄISCHE PATENTSCHRIFT

(11) **EP 0 627 493 B1**
(45) Veröffentlichungstag und Bekanntmachung des Hinweises auf die Patenterteilung: **30.10.1996**
(21) Anmeldenummer: 94250137.0
(22) Anmeldetag: 19.05.1994
(51) Int. Cl.: C21C 5/56, F27D 13/00, C22B 1/00

(54) **Verfahren und Vorrichtung zur Schrottvorwärmung**
Process and installation for preheating of scrap
Procédé et dispositif pour le préchauffage des ferrailles

(30) Priorität: 02.06.1993 DE 4318935
(43) Veröffentlichungstag der Anmeldung: 07.12.1994
(73) Patentinhaber: MANNESMANN Aktiengesellschaft, 40213 Düsseldorf (DE)
(72) Erfinder: Pohl, Ulrich, Dipl.-Ing., D-45470 Mülheim (DE)
(74) Vertreter: Meissner, Peter E., Dipl.-Ing.

(56) Entgegenhaltungen:
- EP-A- 0 078 446
- WO-A-87/06331
- WO-A-88/04397
- WO-A-89/08810

## Beschreibung

Die Erfindung betrilfft ein Verfahren zur Schrottvorwärmung, bei dem gasförmige Medien mit der fühlbaren Wärme von Rauchgas, das in einer Brennkammer nachverbrannt und in einem Filter gereinigt wird, aufgewärmt werden, sowie die dazu erforderliche Vorrichtung.

Bei der Stahlherstellung wird angestrebt, die hierbei entstehenden Energien weitgehenst auszunutzen. Hierzu zählt auch die Verwendung der fühlbaren Wärme von Schrottschmelzöfen zur Vorwärmung des Möllers, insbesondere des Schrottes.

Der in den Hüttenwerken eingesetzte Schrott enthält je nach Herkunft verschiedene Mengen organischer Bestandteile, z. B. aus Farbschichten, anhaftendem Öl, Textil- sowie Kunststoff- oder Kabelreste, insbesondere aus dem Verschrotten von Autos o. ä. Quellen, sowie Papier, Plastik und Holz, die beim Sammeln und Umschlagen des Schrottes in diesen gelangen.

So ist aus der DE 30 38 515 A1 eine Stahlherstellungsanlage bekannt, bei der die Wärmeenergie der Abgase eines Elektroofens ausgenutzt wird zum Vorerhitzen von Materialien wie Schrott, Eisen und Eisenlegierungen. Dabei gelangt das den Ofen verlassende Rauchgas in eine Brennkammer und wird von hier über eine Bypass- oder Übertragungsleitung direkt dem im Beschickungskübel befindlichen Einsatz zugeführt. In nachteiliger Weise weichen bei diesem Verfahren unverbrannt oder teilverbrannte Schadstoffe und toxische Komponenten aus dem Schmelzofen und dem in Reihe geschalteten Schrottvorwärmer.

Aus EP 0 078 446 A1 ist ein Verfahren und eine vorrichtung zum Vorwärmen von Vorwärmgut mit heißen Rauchgasen bekannt, bei dem eine Berührung des Vorwärmgutes mit dem Rauchgas vermieden wird. In dieser Schrift wird vorgeschlagen, die Rauchgasleitung mit einem Wärmetauscher zu verbinden und die Sekundärseite des Wärmetauschers über eine Speiseleitung sowie eine Rückleitung mit einem Vorwärmofen in Verbindung zu bringen. Um einen raschen Umlauf des Wärmeübertragungsmediums zu erhöhen, wird darüber hinaus ein Umwälzaggregat vorgeschlagen, das eine schnellere Bewegung des im Kreis geförderten Mediums Luft oder Schutzgas ermöglicht.

Nachteil des aus dieser Schrift bekannten Verfahrens ist das immer stärkere Aufladen der Umlaufluft mit Schadstoffen aus dem in der Vorwärmstation aufgewärmten Einsatz.

Weiterhin ist aus der Schrift DE 35 21 569 ein Verfahren und eine Anlage für die Vorwärmung von in einem Elektroofen einzusetzenden Schrott bekannt, bei dem das Vorwärmgas durch einen Schrottkorb geführt wird und das ein Teilstrom des Vorwärmgases nacn Maßgabe der Beladung des Vorwärmgases im Vorwärmkreislauf mit Schadstoff und Wasserdampf im heißen Bereich der Ofengase in diese eingemischt wird, wo die Schadstoffe verbrennen, und die dem Teilstrom entsprechende Menge des Vorwärmgases durch frisches Vorwärmgas ersetzt wird. In einer bevorzugten Ausführungsform wird Luft als vorwärmgas benutzt, wobei die im Kreislauf geführte Luft mit aus dem Schrott aufgenommenen organischen und auch anorganischen Substanzen, die schon bei verhältnismäßig niedrigen Temperaturen verschwelen, beladen wird.

Schließlich sei noch auf die WO-A-87/06331 verwiesen, aus der ein Verfahren und eine Vorrichtung zur Einsatz-Vorwärmung bekannt ist. Die Rauchgase werden dabei zunächst in einer Brennkammer verbrannt und einschließend den Vorwärmstationen zugeleitet.

Den genannten und aus der betrieblichen Praxis bekannten Verfahren zur Vorwärmung von Schrott in Elektrostahlwerken mittels der heißen und staubbeladenen Abgase des Elektrolichtbogenofens haftet insbesondere noch folgender Nachteil an.
Die Abgase enthalten Sauerstoff in wechselnden Anteilen. Bei der Vorwärmung des Schrotts kühlen die Gase ab und verlassen die Schrottvorwärmvorrichtung zu Beginn des Aufheizens mit niedriger Temperatur, die sich im Verlauf des Aufheizvorganges erhöht. Solange noch keine Zündtemperatur für die enthaltenen brennbaren Bestandteile erreicht ist, weil der Sauerstoffgehalt des Abgases für eine Verbrennung nicht ausreicht, werden die brennbaren Bestandteile vergast oder verschwelt. Dabei bilden sich unverbrannte Schwelgase und organische Schadstoffe wie Dioxine und Furane. Das den Schrott verlassene Abgas wird sur Vermeindung von Umweltbelastungen zunächst unter ausreichendem Sauerstoffzusatz soweit aufgeheizt, daß die unverbrannten Anteile mit Sicherheit mitverbrannt werden. Hierbei wird oft ein Teil des Abgases aus dem Schmelzaggregat verwendet, dessen Energie dadurch nicht für die Schrottvorwärmung zur Verfügung steht. Die entstandenen Dioxine und Furane werden dabei nicht zerstört und müssen mittels Aktivkohle oder Katalysatoren abgeschieden werden.

Die Verbrennungsrückstände (Flugaschen) vermischen sich mit den im Schmelzgefäß beim Einschmelzen des Schrotts entstehenden metallurgischen Stäuben und verunreinigen diese. Wegen der Bildung von Dioxinen und Furanen bei der Schrottvorwärmung werden auch die im Filter abgeschiedenen Stäube hiermit kontaminiert. Die bei der Schrottvorwärmung auf die vorbeschriebene übliche Art bestehenden Nachteile haben die aus energetischen Gründen höchst wünschenswerte Schrottvorwärmung in Ländern mit strengeren Umweltauflagen bisher verhindert.

Die Erfindung hat sich das Ziel gesetzt, die genannten Nachteile zu vermeiden und ein Verfahren und eine Vorrichtung zur Schrottvorwärmung zu schaffen, bei der die fühlbare Wärme der Rauchgase weitgehendst ausgenutzt und in einfacher Weise die wärhrend des Vorwärmprozesses auftretenden Dioxine und Furane beseitigt werden.

Die Erfindung erreicht dieses Ziel durch die kennzeichnenden Merkmale des Verfahrensanspruchs 1 und des Vorrichtungsanspruchs 5.

Bei dem erfindungsgemäßen Verfahren wird Frischluft über einen Wärmetauscher mittels Rauchgas auf eine Temperatur erhitzt, die oberhalb der Zündtemperatur organischer Stoffe liegt. Diese Luft mit einer Temperatur von über 500° Celsisus wird einem oder mehreren parallel geschalteten mit Schrott gefüllten Schrottkörben zugeführt. Die Einleitung der heißen Luft erfolgt vorzugsweise am Boden der Schrottkörbe. Die heiße Luft kühlt zu Beginn des Aufheizvorganges am zunächst kalten Schrott ab . Solange die Zündtemperatur für enthaltene organische Bestandteile, wie Plastik, Farbreste, öle o.ä. nicht erreicht ist, werden diese nur verdampft und verlassen den Schrott mit der abgekühlten Luft unverbrannt. Das Luftgasgemisch, das die Schrottvorwärmstation verläßt, wird einer gemeinsamen Brennkammer zugeführt, in der vollständiger Ausbrand bei über 1.200° C erfolgt.

Ist die Zündtemperatur für die organischen Bestandteile im Schrott erreicht, verbrennen diese vollständig oder zumindst weitgehend bereits in Schrottkorb und geben Wärmeenergie direkt an den Schrott ab. Etwaige noch unverbrannte Anteile werden in der unabhängig von der Brennkammer des Lichtbogenofens vorgesehenen Brennkammer für das Rauchgas der Schrottvorwärmung verbrannt. Bei der Verbrennungstemperatur von über 1200° C werden ggfs. noch enthaltene Dioxine und Furane vollständig zerstört.

Die aus der Verbrennung der brennbaren Anteile im Schrott stammende Wärmeenergie der über 1200° C heißen Abgase wird zur Erhitzung der für die Vorwärmung des Schrotts benötigten Luftmenge auf ca. 500 - 600 ° C verwendet. Sollten im Schrott nicht ausreichend brennbare Bestandteile enthalten sein, kann zusätzlich Heißluft durch rekuperativen Wärmetausch mit dem Abgas des Schmelzofens erzeugt werden. In einer anderen Ausführungsform kann zusätzlich Brennstoff in die Brennkammer eingegeben werden.

Das den Wärmetauscher verlassende Abgas aus der Schrottvorwärmung wird unabhängig von dem Abgas aus dem Schmelzgefäß einem separaten Filter zugeführt, wobei ebenfalls durch Zumischung von Kaltluft die Filtereintrittstemperatur abgesenkt wird. In diesem separaten Filter werden Staube ausgeschieden, die im wesentlichen aus dem Schrott anhaftenden Verunreinigungen und aus Verbrennungsrückständen (Flugasche) besteht. Diese Stäube, die viel Chloride und Alkalien, welche die Verarbeitbarkeit metallurgischer Stäube einschränken, enthalten, unterscheiden sich von den im Schmelzgefäß beim Einschmelzen des Schrotts entstehenden metallurgischen Stäuben.

Beim Einsatz von zwei oder mehreren parallel geschalteten Schrottvorwärmkörben in der Schrottvorwärmstation braucht die Vorwärmung für die Entnahme eines aufgeheizten Schrottkorbes und den Einsatz eines kalten Schrottkorbes nicht unterbrochen zu werden. Durch das zeitversetzte Aufheizen vergleichmäßigt sich die Zusammensetzung der in die Brennkammer zur Nachverbrennung einströmenden Mischung der Abgase aus den Schrottkörben.

Das die Brennkammer verlassende Rauchgas ist frei von toxischen und organischen Stoffen und läßt sich zur weiteren Energieausnutzung zum Warmhalten bereits vorgewärmter Schrottkörbe bzw. zum weiteren Aufheizen einsetzen.

Der in den Lichtbogen chargierte aufgeheizte Schrott ist sauber, d. h. er ist frei von anhaftenden Verunreinigungen und brennbaren Bestandteilen. Beim Chargieren in das Ofengefäß kommt es deshalb nicht zu der üblichen großen Schwallgasmenge mit Stichflammen. Auf ein aufwendiges Gaserfassungssystem für diesen Vorgang und auf große Absaugleistungen kann deshalb verzichtet werden.

Da keine brennbaren Bestandteile im Schrott mehr vorhanden sind und mit der Entfernung der Brennungsrückstände auch das für die Bildung von Dioxinen und Furanen erforderliche Chlor fehlt, kann auch das Abgas aus dem Schmelzofen uneingeschränkt zur Energierückgewinnung genutzt werden.

Eine Rekombination von Dioxinen und Furanen ist nach dem vorliegenden Verfahren nicht möglich.

Ein Beispiel der Erfindung ist in der beigefügten Zeichnung dargelegt.

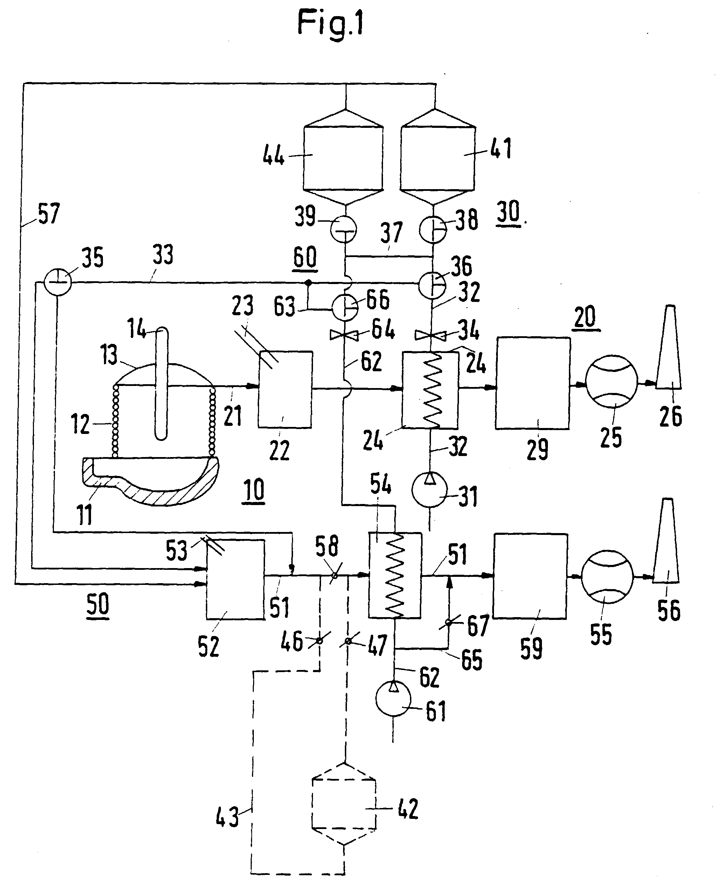

Dabei zeigt die Figur 1 das Fließschema mit einem Schrottschmelzofen 10, der ein Ofenuntergefäß 11 und ein Ofenobergefäß 12 aufweist, das mit einer Ofenhauben 13 abgedeckt ist. Durch die Ofenhaube 13 ist mindestens eine Elektrode 14 geführt, die in das Ofenobergefäß 12 hineinragt. Am oberen Ende des Ofenobergefäßes 12 ist die Rauchgasführung 20 angeschlossen mit der Rauchgasleitung 21, die zur Brennkammer 22 führt. An die Brennkammer 22 ist eine nicht weiter dargestellte Brenngaszuführung 23 angeschlossen.

In der Rauchgasleitung 21 ist ein Wärmetauscher 24 vorgesehen, an den sich eine Filtereinrichtung 29 anschließt. Das Rauchgas wird durch ein Sauggebläse 25 aus dem System abgezogen und über einen Kamin 26 ins Freie geleitet.

Mit dem Wärmetauscher 24 steht eine Warmlufteinrichtung 30 in Verbindung, die ein Verdichter 31 aufweist, der Frischluft in die Frischluftleitung 32 fördert. In der Frischluftleitung 32 ist in Strömungsrichtung ein Absperrschieber 34 und eine Armatur 36 vorgesehen. Mit Hilfe der Armatur 36 Läßt sich die aufgeheizte Luft zum einen in eine Abzweigung 33 und zum anderen in einen Schrottkorb 41 bzw. über eine Verbindungsleitung 37 parallel in einen Schrottkorb 44 leiten. Bei den Schrottkörben 41 und 44 sind Armaturen 38 und 39 vorgesehen, die ein Absperren der Zu- und Ableitung während eines Korbwechsels ermöglichen.

Das Rauchgas des bzw. der Schrottkörbe 41,44 wird über eine Rauchgasleitung 57 einer Brennkammer 52 der Rauchgasführung des Schrottkorbes 50 zugeführt. Die Brennkammer 52 ist darüber hinaus an eine Brenngaszuführung 53 sowie an die mit der Frischluftleitung 32 verbundene Abzweigung 33 angeschlossen.

Das Rauchgas verläßt die Brennkammer 52 über eine Rauchgasleitung 51 mittels eines Sauggebläses 55 über einen Wärmetauscher 54 und durch einen Filter 59 zu einem Kamin 56 ins Freie.

Mit dem Wärmetauscher 54 steht eine Warmlufteinrichtung 60 in Verbindung, die einen Verdichter 61 aufweist, der Frischluft in die Frischluftleitung 62 fördert. Die Frischluftleitung 62 weist einen Absperrschieber 64 sowie eine Armatur 66 auf, mit dem sie über eine Abzweigung 63 der Abzweigung 33 in Verbindung steht und mündet, ebenso wie die Frischluftleitung 32, in Filter 41 und 44.

In der Abzweigung 33 ist noch eine Armatur 35 vorgesehen, mit der Heißluft in die Rauchgasleitung in Strömungsrichtung hinter der Brennkammer 52 einspeisbar ist.

Weiterhin ist an die Frischluft 62 vor dem Wärmetauscher 54 eine Umgehungsleitung 65 mit einer Absperrung 67 vorgesehen, mit der Kaltluft der in der Kaltluft 51 befindlichen heißen Rauchgase vor dem Filter 59 zumischbar ist.

An die Rauchgasleitung 51 ist zwischen der Brennkammer 52 und der Wärmetauscher 54 über eine Leitung 43 ein weiterer Schrottkorb 42 anschließbar. Zum Umleiten des Rauchgases ist die Armatur 58 in der Rauchgasleitung 51 sowie die Armaturen 46 und 47 in der Umgehungsleitung 43 vorgesehen.

### Positionsliste

- 10: Schrottschmelzofen
- 11: Ofenuntergefäß
- 12: Ofenobergefäß
- 13: Ofenhaube
- 14: elektrode
- 20: Rauchgasführung
- 21: Rauchgasleitung
- 22: Brennkammer
- 23: Brenngaszuführung
- 24: Wärmetauscher
- 25: Sauggebläse
- 26: Kamin
- 29: Filtereinrichtung
- 30: Warmlufteinrichtung
- 31: Verdichter
- 32: Frischluftleitung
- 33: Abzweigung
- 34: Absperrschieber
- 35, 36: Armatur
- 37: Verbindungsleitung
- 38, 39: Armaturen vor Schrottkörben (Heißluft)
- 40: Schrottvorwärmung
- 41: Schrottkorb (Heißluft)
- 42: Schrottkorb (Rauchgas)
- 43: Umgehungsleitung
- 44: Schrottkorb parallel geschaltet
- 46, 47: Absperrklappen
- 50: Rauchgasführung Schrottkorb
- 51: Rauchgasleitung
- 52: Brennkammer
- 53: Brenngasführung
- 54: Wärmetauscher
- 55: Sauggebläse
- 56: Kamin
- 57: Rauchgasleitung (Gas/Luft)
- 58: Absperrklappe
- 59: Filtereinrichtung
- 60: Warmluft für Schrottkorb
- 61: Verdichter
- 62: Frischluftleitung
- 63: Abzweigung
- 64: Absperrschieber
- 65: Umgehungsleitung
- 66: Armatur
- 67: Absperrung

## Patentansprüche

1. Verfahren zur Schrottvorwärmung, bei dem gasförmige Medien mit der fühlbaren Wärme von Rauchgas, das in einer Brennkammer nachverbrannt und anschließend in einem Filter gereinigt wird, aufgewärmt werden,
gekennzeichnet durch folgende Schritte:
a) das Rauchgas wird mit einer Temperatur über 1200° C nachverbrannt;
b) die nachverbrannten heißen Gase werden ungereinigt über einen Wärmetauscher geführt;
c) in dem Wärmetauscher wird mit der fühlbaren Wärme der nachverbrannten heißen Gase frisch angesaugte Außenluft aufgewärmt;
d) ein erster Teil der Warmluft wird mit einer Temperatur, die oberhalb der Zündtemperatur organischer Stoffe liegt, mengenmäßig einstellbar durch mindestens einen mit Schrott gefüllten Korb geleitet.
e) ein anderer Teil der den Wärmetauscher verlassenden Warmluft wird mengenmäßig einstellbar dem Nachbrenner als Heißwind zur Verfügung gestellt und/oder den nachverbrannten heißen Gasen zugemischt.

2. Verfahren nach Anspruch 1,
dadurch gekennzeichnet,
daß den verbrannten Gasen und der Warmluft in der Brennkammer zusätzlich gasförmige Stoffe und/oder Sauerstoff zugeführt werden.

3. Verfahren nach Anspruch 1,
dadurch gekennzeichnet,
daß die den Wärmetauscher verlassende Warmluft mit einer Temperatur von über 500 ° C dem Schrott zugeführt wird.

4. Verfahren nach Anspruch 1,
dadurch gekennzeichnet,
daß die die Brennkammer verlassenden heißen Gase in einer weiteren Schrottvorwärmstation durch bereits vorgewärmten Schrott geleitet werden.

5. Verfahren nach Anspruch 4,
dadurch gekennzeichnet,
daß die nachverbrannten heißen Gase vor dem Durchströmen des Wärmetauscher durch die mit vorgewärmten Schrott gefüllten Schrottvorwärmstationen geleitet werden.

6. Anlage zur Durchführung des Verfahrens nach Anspruch 1 mit einem Schrottschmelzofen, einer Brennkammer, in der das Rauchgas des Ofens nachverbrennbar ist, mindestens einer Schrottvorwärmstation sowie einer über eine Rauchgasleitung mit der Brennkammer verbundenen Filtereinrichtung,
dadurch gekennzeichnet,
daß in der Rauchgasleitung (21) zwischen der Brennkammer (22) und der Filtereinrichtung (29) ein Wärmetauscher (24) vorgesehen ist,
durch den eine Frischluftleitung (32) geführt ist, an die die Schrottvorwärmstation (40) mit mindestens einem Schrottkorb (41) angeschlossen ist,
daß an dem Schrottkorb (41) eine Abgasleitung (37) angeschlossen ist, die zu einer separat von der Brennkammer (22) angeordneten Brennkammer (52) führt und durch die das Rauchgas der Schrottvorwärmung (40) leitbar ist,
daß in Strömungsrichtung hinter der Brennkammer (52) ein Wärmetauscher (54) vorgesehen ist, durch den eine Fristluftleitung (52) geführt ist, die parallel oder im Wechsel durch Frischluftleitung (32) an die Schrottvorwärmung (42) angeschlossen ist.

7. Anlage nach Anspruch 6,
dadurch gekennzeichnet,
daß parallel zum Schrottkorb (41) ein weiterer Schrottkorb (44) angeordnet ist, und daß Armaturen (38,39) vorgesehen sind, die ein Umschalten zur jeweils Einzel- oder Parallelbetrieb der Schrottkörbe (41,44) erlauben.

8. Anlage nach Anspruch 6,
dadurch gekennzeichnet,
daß in den Frischluftleitungen (32, 62) Absperrschieber (34,64) vorgesehen sind.

9. Anlage nach den Anspruch 6,
dadurch gekennzeichnet,
daß in den Frischluftleitung (32,62) Armaturen (36, 66) angeordnet sind, die die aufgewärmte Frischluft zu den Schrottkörben (41,44) und/oder zu einer Abzweigung (33) und von dort in die Brennkammer (52) bzw. in die Rauchgasleitung (51) hinter dem Brenner (52) leiten.

10. Anlage nach Anspruch 6,
dadurch gekennzeichnet,
daß ein Schrottkorb (42) vorgesehen ist, der über eine mit Armaturen (46,47) versehene Umgehungsleitung (43) an die eine Armatur (58) aufweisende Rauchgasleitung (51) angeschlossen ist.

11. Anlage nach anspruch 10,
dadurch gekennzeichnet,
daß die Umgehungsleitung (43) im Bereich zwischen der Brennkammer (52) und dem Wärmetauscher (54) an die Rauchgasleitung (51) angeschlossen ist.

## Claims

1. A method for preheating scrap, in which gaseous media are heated using the sensible heat of flue gas which is after-burned in a combustion chamber and is then purified in a filter,
characterised by the following steps:
a) the flue gas is after-burned at a temperature above 1200°C;
b) the after-burned hot gases are guided, unpurified, through a heat exchanger;
c) in the heat exchanger, freshly drawn-in external air is heated with the sensible heat of the after-burned hot gases;
d) a first portion of the hot air is passed, at a temperature which is above the ignition temperature of organic substances, adjustably in terms of quantity through at least one basket filled with scrap;
e) another portion of the hot air leaving the heat exchanger is made available to the after-burner as hot air, adjustably in terms of quantity, and/or is admixed to the after-burned hot gases.

2. A method according to Claim 1, characterised in that additionally gaseous substances and/or oxygen are supplied to the burned gases and the hot air in the combustion chamber.

3. A method according to Claim 1, characterised in that the hot air leaving the heat exchanger is supplied to the scrap at a temperature of above 500°C.

4. A method according to Claim 1, characterised in that the hot gases leaving the combustion chamber are passed through already preheated scrap in an additional scrap preheating station.

5. A method according to Claim 4, characterised in that the after-burned hot gases are passed through the scrap preheating stations filled with preheated scrap before flowing through the heat exchanger.

6. A plant for performing the method according to Claim 1, comprising a scrap melting furnace, a combustion chamber in which the flue gas of the furnace can be after-burned, at least one scrap preheating station and a filter means connected to the combustion chamber via a flue gas line, characterised in that a heat exchanger (24) is provided in the flue gas line (21) between the combustion chamber (22) and the filter means (29), through which exchanger a fresh air line (32) passes, to which the scrap preheating station (40) is connected with at least one scrap basket (41), that an exhaust gas line (37) is connected to the scrap basket (41), which line leads to a combustion chamber (52) arranged separately from the combustion chamber (22) and through which the flue gas from the scrap preheating stage (40) can be passed, that a heat exchanger (54) is provided in the direction of flow after the combustion chamber (52), through which exchanger a fresh air line (62) passes which is connected to the scrap preheating stage (42) in parallel or alternately with fresh air line (32).

7. A plant according to Claim 6, characterised in that an additional scrap basket (44) is arranged parallel to the scrap basket (41), and that fittings (38, 39) are provided which permit switching to individual or parallel operation of the scrap baskets (41, 44) in each case.

8. A plant according to Claim 6, characterised in that gate valves (34, 64) are provided in the fresh air lines (32, 62).

9. A plant according to Claim 6, characterised in that fittings (36, 66) are arranged in the fresh air lines (32, 62), which fittings guide the heated fresh air to the scrap baskets (41, 44) and/or to a branch (33) and from there into the combustion chamber (52) or into the flue gas line (51) after the burner (52).

10. A plant according to Claim 6, characterised in that a scrap basket (42) is provided which is connected via a bypass line (43) provided with fittings (46, 47) to the flue gas line (51) which bears a fitting (58).

11. A plant according to Claim 10, characterised in that the bypass line (43) is connected to the flue gas line (51) in the region between the combustion chamber (52) and the heat exchanger (54).

## Revendications

1. Procédé pour le préchauffage de ferraille, pour lequel des moyens gazeux sont chauffés par la chaleur sensible d'un gaz de combustion qui est soumis à une post-combustion dans une chambre de combustion et qui est ensuite nettoyé dans un filtre,
caractérisé par les étapes suivantes :
a) le gaz de combustion est soumis à une post-combustion à une température supérieure à 1200°C ;
b) les gaz chauds soumis à une post-combustion sont guidés, de façon non nettoyée, au-dessus d'un échangeur de chaleur ;
c) dans l'échangeur de chaleur, de l'air externe fraîchement aspiré est chauffé par la chaleur sensible des gaz chauds soumis à une post-combustion ;
d) une première partie de l'air chaud est guidée à travers au moins un panier rempli de ferraille, à une température qui est située au-dessus de la température d'inflammation de matières organiques, de façon à pouvoir être réglée en fonction de la quantité ;
e) une autre partie de l'air chaud quittant l'échangeur de chaleur est mise à la disposition du brûleur de post-combustion, de façon à pouvoir être réglée en fonction de la quantité, comme vent chaud, et/ou est mélangée aux gaz chauds soumis à la post-combustion.

2. Procédé selon la revendication 1,
caractérisé en ce qu'aux gaz brûlés et à l'air chaud sont amenés, dans la chambre de combustion, d'autres matières gazeuses et/ou de l'oxygène.

3. Procédé selon la revendication 1,
caractérisé en ce que l'air chaud quittant l'échangeur de chaleur est amené, à une température supérieure à 500°C, à la ferraille.

4. Procédé selon la revendication 1,
caractérisé en ce que les gaz chauds quittant la chambre de combustion sont guidés dans un autre poste de préchauffage de ferraille, à travers de la ferraille déjà préchauffée.

5. Procédé selon la revendication 4,
caractérisé en ce que les gaz chauds soumis à une post-combustion sont guidés, avant l'écoulement à travers l'échangeur de chaleur, à travers les postes de préchauffage de ferraille remplis de ferraille préchauffée.

6. Installation pour la mise en oeuvre du procédé selon la revendication 1, comportant un four de fusion de ferraille, une chambre de combustion, dans laquelle le gaz de combustion du four peut être soumis à une post-combustion, au moins un poste de préchauffage de ferraille, ainsi qu'un dispositif de filtrage relié par l'intermédiaire d'une conduite de gaz de combustion à la chambre de combustion, caractérisé,
- en ce qu'un échangeur de chaleur (24) est prévu dans la conduite de gaz de combustion (21), entre la chambre de combustion (22) et le dispositif de filtrage (29), à travers lequel est guidée une conduite d'air frais (32), à laquelle est raccordé le poste de préchauffage de ferraille (40) comportant au moins un panier de ferraille (41),
- en ce qu'une conduite de gaz d'échappement (37) est raccordée au panier de ferraille (41), conduite de gaz d'échappement qui est guidée vers une chambre de combustion (52) agencée de façon séparée de la chambre de combustion (22), et à travers laquelle peut être guidé le gaz de combustion du préchauffage de ferraille (40),
- en ce qu'un échangeur de chaleur (54) est prévu en direction d'écoulement derrière la chambre de combustion (52), à travers lequel est guidée une conduite d'air frais (62), qui est raccordée, parallèlement ou de façon alternative avec la conduite d'air frais (32), au préchauffage de ferraille (42).

7. Installation selon la revendication 6,
caractérisée en ce que parallèlement au panier de ferraille (41) est agencé un autre panier de ferraille (44), et en ce que l'on prévoit des armatures (38,39) qui permettent une commutation respectivement vers les fonctionnements individuel ou parallèle des paniers de ferraille (41,44).

8. Installation selon la revendication 6,
caractérisée en ce que l'on prévoit des coulisseaux d'arrêt (34,64) dans les conduites d'air frais (32,62).

9. Installation selon la revendication 6,
caractérisée en ce que des armatures (36,66) sont agencées dans les conduites d'air frais (32,62), armatures qui conduisent l'air frais chauffé vers les paniers de ferraille (41,44) et/ou vers une dérivation (33) et, de là, dans la chambre de combustion (52) ou dans la conduite de gaz d'échappement (51) derrière le brûleur (52).

10. Installation selon la revendication 6,
caractérisée en ce que l'on prévoit un panier de ferraille (42) qui est raccordé, par l'intermédiaire d'une conduite de contournement (43) munie d'armatures (46,47), à la conduite de gaz d'échappement (51) présentant un armature (58).

11. Installation selon la revendication 10,
caractérisée en ce que la conduite de contournement (43) est raccordée, dans la zone entre la chambre de combustion (52) et l'échangeur de chaleur (54), à la conduite de gaz d'échappement (51).
